Europäisches Patentamt

European Patent Office

Office européen des brevets

(11) Publication number: **0 194 035**
**B1**

(12) **EUROPEAN PATENT SPECIFICATION**

(45) Date of publication of patent specification: **17.10.90**

(21) Application number: **86300727.4**

(22) Date of filing: **04.02.86**

(51) Int. Cl.⁵: **F 16 F 13/00, B 60 K 5/12**

(54) Hydraulic-elastomeric vehicle engine mount.

(30) Priority: **28.02.85 US 706675**

(43) Date of publication of application:
**10.09.86 Bulletin 86/37**

(45) Publication of the grant of the patent:
**17.10.90 Bulletin 90/42**

(84) Designated Contracting States:
**DE FR GB**

(56) References cited:
**EP-A-0 142 943**
**EP-A-0 165 095**
**FR-A-2 547 378**
**GB-A-2 041 485**
**US-A-4 416 445**

(73) Proprietor: **GENERAL MOTORS CORPORATION**
**General Motors Building 3044 West Grand Boulevard**
**Detroit Michigan 48202 (US)**

(72) Inventor: **Miller, John Walter**
**20 Bywood Court**
**Centerville Ohio 45459 (US)**
Inventor: **Peterson, Linn Albert**
**5310 Starwood Drive**
**Milford Michigan 48042 (US)**
Inventor: **Kingsley, Charles A.**
**14580 Ivanhoe**
**Utica Michigan 48087 (US)**

(74) Representative: **Denton, Michael John et al**
**Patent Section Vauxhall Motors Limited 1st Floor Gideon House 26 Chapel Street**
**Luton Bedfordshire LU1 2SE (GB)**

Courier Press, Leamington Spa, England.

**Description**

This invention relates to a hydraulic-elastomeric vehicle engine mount as specified in the preamble of claim 1.

In a typical vibration-isolating hydraulic-elastomeric mount as used for vehicle engines, there is normally a pair of elastomeric-walled chambers which are divided by a rigid partition and are interconnected by an orifice either through or around such partition to produce a damping effect. However, such damping is not desirable under all circumstances. In the case of isolating and absorbing engine vibrations, it is desirable that there be little or no hydraulic damping at low amplitudes and frequency. To this end, there has evolved both a displaceable partition and a so-called "decoupler" member mounted for limited reciprocal movement thereon, both of which operate to effect cyclic volume change in the chambers at low frequencies and amplitudes without forcing fluid through the orifice and thus without the hydraulic damping. Examples of such hydraulic-elastomeric mounts representative of the present state of the art are disclosed in EP-A-0115174 and EP-A-012943.

Such features have provided substantially improved engine vibration isolation and absorption, but it has been found that improved road isolation for the engine and in particular reduced harshness on medium-to-hard impacts can be realized in a similar way to that achieved in vehicle suspension shock absorbers (dampers) and strut cartridges by also differentiating the hydraulic damping between jounce and rebound.

In vehicle suspension shock-absorbing devices, the damping differentiation is normally provided by fine-tuning a valve system so that there is less damping during wheel jounce than during rebound. A hydraulic-elastomeric mount having a flexible flap valve member for providing different damping rates in the respective directions of operation is also known from US-A-4416445. This mount is not however provided with a decoupler.

Accordingly the present invention is concerned with achieving a hydraulic-elastomeric vehicle engine mount capable of giving improved road isolation for the engine, by the incorporation of a potentially simple and cost-effective jounce rebound damping differentiator.

To this end, a hydraulic-elastomeric vehicle engine mount in accordance with the present invention is characterised by the features specified in the characterising portion of claim 1.

In a preferred embodiment of a hydraulic-elastomeric vehicle engine mount in accordance with the present invention, a simple and cost-effective means for incorporating a jounce rebound damping differentiator in a hydraulic-elastomeric mount is provided by mounting the decoupler in an opening through the partition and overhanging such opening on the opposite sides of the partition so as to engage therewith to limit its reciprocal travel and thereby the damping decoupling effect provided thereby.

During the development of the present invention, it was observed that the decoupler reciprocates once for each engine jounce-rebound cycle at frequencies within a range within which road isolation improvement is desired, and this is used to advantage in the preferred embodiment in a manner which will now be explained.

In conformity with the present invention, one or more by-pass (secondary) orifices are formed in the partition adjacent the opening therethrough for the decoupler. One of the decoupler overhangs is extended to cover such by-pass orifices so as to serve as check valve therefor during normal decoupler operation.

An important feature is that the one decoupler overhang selected to serve as the check valve is that which during its normal decoupler movement will then also open the by-pass orifices during engine jounce and close the same during engine rebound. With the check valve closing the by-pass orifices during engine rebound, the only fluid flow route from one chamber to the other is through the normal (primary) orifice in the normal manner. But then during engine jounce, when the check valve opens because of its normal decoupler movement, the additional fluid flow allowed through the by-pass orifices results in desirably less damping, for improved road isolation.

This additional damping feature is thereby accomplished with only slight modification of existing parts and without the need for any additional parts.

In the drawings:

Figure 1 is a side view partially in section of a preferred embodiment of a hydraulic-elastomeric mount in accordance with the present invention;

Figure 2 is a top view of the hydraulic-elastomeric mount shown in Figure 1;

Figure 3 is a sectional view on the line 3--3 of Figure 1, in the direction of the arrows;

Figure 4 is an enlarged partial sectional view on the line 4--4 of Figure 3, in the direction of the arrows, and showing a decoupler in its alternative position;

Figure 5 is an exploded view showing the parts of the hydraulic-elastomeric mount of Figure 1;

Figure 6 is a top view of a partition and decoupler-damping differentiator device in the hydraulic-elastomeric mount of Figure 1;

Figure 7 is a sectional view on the line 7--7 of Figure 6, in the direction of the arrows;

Figure 8 is a sectional view on the line 8--8 of Figure 6, in the direction of the arrows; and

Figure 9 is a graph illustrating the jounce and rebound operation of the hydraulic-elastomeric mount of Figure 1.

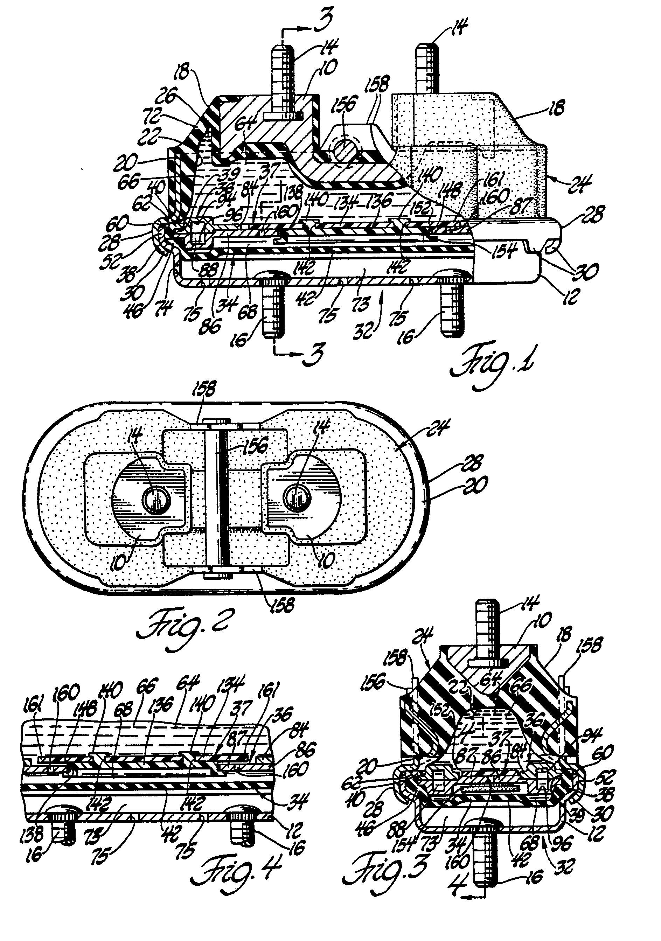

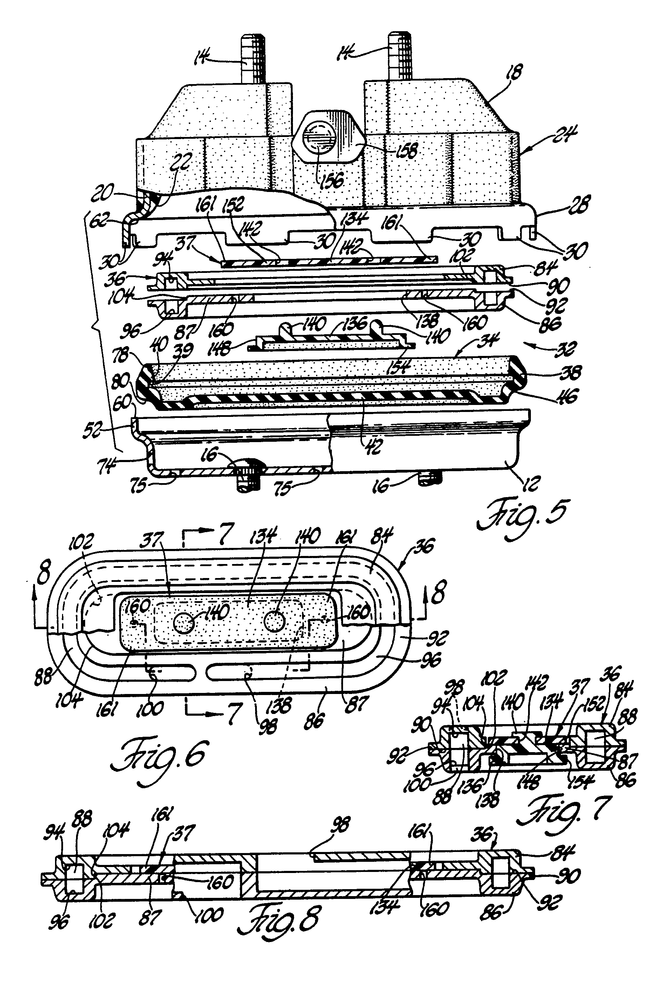

With reference now to the drawings, there is shown in Figures 1 to 8 a preferred embodiment of a hydraulic-elastomeric vehicle engine mount in accordance with the present invention, for mounting an engine in a vehicle. The mount has a generally rectangular shape as viewed from the side in Figure 1 and a generally oval shape as viewed from the top in Figure 2, and comprises a yoke-shaped cast aluminium mounting member 10 and an oval dish-shaped stamped sheet metal mounting member 12. The mounting members 10 and 12 each have a pair of studs 14 and 16 respectively projecting outwardly therefrom for attachment to an engine (not shown) and an engine-supporting member such as a frame or cradle (not shown) of the vehicle. A hollow elastomeric body 18 made of natural or synthetic rubber interconnects the mounting members 10 and 12, and to this end is moulded to and about the yoke-shaped mounting member 10 and also to the interior and exterior of an oval-shaped stamped sheet metal retainer 20.

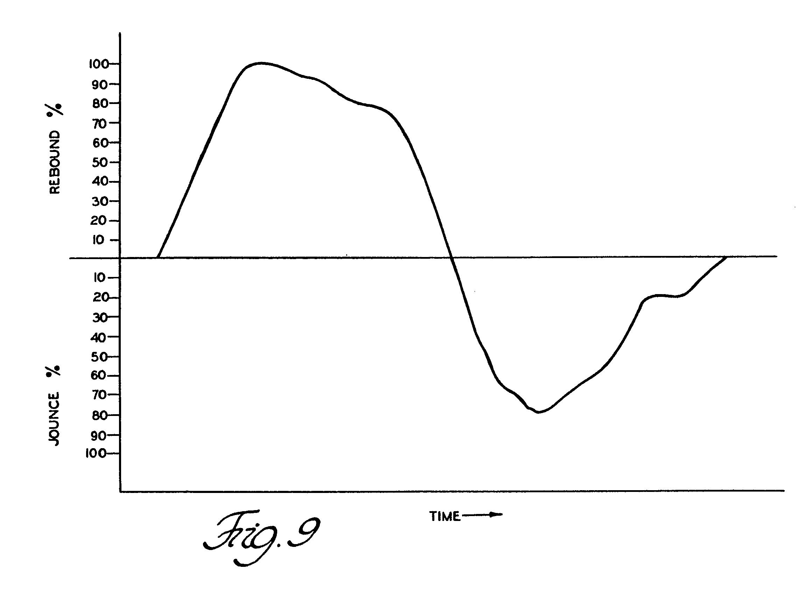

The elastomeric body 18 is configured such that it essentially completely defines a hollow cavity 22 therein extending beneath and about the yoke-shaped mounting member 10 and interiorly of the retaining member 20 so as to positively prevent any leakage from the cavity outwardly past these parts while also having extensive surface attachment therewith. Moreover, the mounting member 10 with its studs 14, the elastomeric body 18 and the retainer 20 form a sub-assembly shown and designated as 24 in Figure 5.

The sub-assembly 24 is configured such that the elastomeric body can be moulded to these parts in a conventional two-piece mould without separate or loose core pieces, using either injection or transfer moulding, and with little finishing such as flash rubber removal required.

This includes the formation of directional rate control-effecting voids within the elastomeric body itself and as a part of the liquid cavity. For example, with diametrically oppositely located voids 26 (only one of which is exposed in Figure 1), the mount is provided with a high (hard) rate in one crosswise direction and both a relatively soft (low) rate at low amplitudes and a non-linear high (hard) rate at high amplitudes in a direction transverse thereto (vertical and horizontal directions respectively as viewed from the top in Figure 2), such differences in rates being especially useful in isolating certain combustion engine vibrations, as is well-known in the art.

The retainer 20 has an outwardly projecting collar 28 at its lower periphery with a plurality of circumferentially spaced tabs 30 which are initially formed to project straight downwardly as shown in Figure 5 to allow the collar 28 to receive a second sub-assembly 32. The latter sub-assembly comprises the other mounting member 12, an oval-shaped elastomeric diaphragm 34 made of natural or synthetic rubber, an oval-shaped partition and orifice assembly 36 and a hydraulic damping decoupler assembly 37. The elastomeric diaphragm 34 has an annular rim section 38 with a radially inwardly facing internal groove 39, and the shoulder 40 forming the side of the groove opposite the spanning central portion 42 of the diaphragm is flexible to receive the periphery of the partition and orifice assembly 36. The periphery of the partition and orifice assembly is thus elastomerically sandwiched, as is seen in Figures 1 and 3, between the shoulder 40 and the shoulder 46 forming the opposite side of the groove, the latter shoulder being formed integral with and extending radially outwardly from the central diaphragm portion 42 to join the latter to the diaphragm rim portion 38.

The lower mounting member 12 is formed with a collar 52 to receive the rim 38 of the diaphragm 34 with the partition and orifice assembly 36 in place and the damping decoupler assembly 37 having been previously assembled to the latter as will be described in more detail later. The resulting subassembly 32 is then adapted to be fitted into the collar 28 of the retainer 20 of the other subassembly 24 prior to bending-over of the tabs 30 to retain the whole mount assembly together. In such fit, the lower mounting member 12 is telescopically received in the retainer collar 28 with the rim 38 of the diaphragm pressed therebetween, whereafter the tabs 30 of the retainer are bent over the collar 52 of the lower mounting member to retain the subassemblies 24 and 32 together, as shown in Figures 1, and 3. In such assembly, the upper edge 60 of the collar 52 of the lower mounting member engages the radial shoulder 62 of the collar 28 of the retainer 20 to determine the preload on the diaphragm rim 38, which plays a part in amplitude control as well as sealing, as will be described in more detail later.

As is seen in Figures 1 and 3, the elastomeric diaphragm 34 closes the elastomeric body 18 so as to form therewith a closed cavity generally designated 36 which is divided by the partition and orifice assembly 36 into a primary chamber 66 enclosed by the elastomeric body 18 and a secondary chamber 68 enclosed by the diaphragm 34. Prior to the closure of the cavity 64 at assembly it is filled with a liquid antifreeze solution.

On the assumption that there is an orifice interconnecting the chambers 66 and 68, liquid in the primary chamber is forced to flow through such orifice at a restricted rate into the secondary chamber upon contraction of the primary chamber, and in the opposite direction on expansion thereof, to thereby provide a damping effect. Upon contraction of the primary chamber 66, the annular wall section 72 of the elastomeric body 18 extending between the mounting member 10 and the retainer 20 (see Figure 1) is caused to bulge outwardly, while the liquid therein is forced to flow through the orifice into the chamber 68 to expand the latter as permitted by the elasticity of the diaphragm central portion 42. Then on reversal in amplitude and resultant expansion of the primary chamber 66, the stretched central diaphragm portion 42 retracts and thereby contracts the secondary chamber 68, forcing the liquid to flow back through the orifice into the primary chamber to complete the damping cycle. To ensure otherwise free expansion and contraction of the secondary chamber 68, the space 73 between the diaphragm 34 and the lower mounting member 12 is vented to atmosphere through a plurality of radial holes 74 formed in the side of the latter part. In addition, a plurality of drain holes 75 provided in the bottom of the mounting member 12 prevent the accumulation of water therein which might freeze and present an obstacle to the movement of the diaphragm 34.

By virtue of the diaphragm 34 being configured at its rim 38 to extend both around and over the periphery of the partition and orifice assembly 36, there is formed not only a seal between the chambers but also a double seal between the chambers and the exterior, resulting in excellent sealed integrity of the mount. Moreover, the diaphragm 34 is configured so as to permit limited substantially free (soft) travel of the partition and orifice assembly 36 relative to the mounting members 10 and 12 below a predetermined low vibration amplitude of one mounting member relative to the other, and to prevent such relative travel above such amplitude, so that the flow through the orifice between the chambers to effect damping does not occur until such prescribed low-vibration amplitude is exceeded.

This limited substantially uninhibited partition movement provides precise amplitude control and is simply effected with a predetermined compliance of the diaphragm rim 38 between the sandwiching retainer 20 and the lower mounting member 12. To this end, the diaphragm rim 38 is free-formed as shown in Figure 5 so as to have adjacent its perimeter an annular angular sealing bead 78 and an annular flat sealing portion 80 that face in opposite directions and have more effective compliance than the radially inwardly extending wall sections of the groove shoulders 40 and 46 which sandwich the partition and orifice assembly 36. There is thus substantially more compliance for sealing, particularly as provided by the raised-face sealing bead 78, which is deflected at assembly, as shown in Figures 1 and 3, so as to tightly seal against the retainer member 20, while the partition-capturing elastomeric shoulder (wall) sections 40 and 46 are preloaded to a predetermined extent depending on the amplitude responsiveness desired, as determined by the edge 60 of the lower mounting member engaging the radial shoulder 62 of the retainer collar 28. On the other hand, the hydraulically biased partition and orifice assembly 36 is forced alternatively against the elastomeric shoulders 40 and 46 of the diaphragm rim so as to maintain tight sealing between the chambers 66 and 68.

The partition and orifice assembly 36 is of die-cast metal construction as shown, or could alternatively be of plastics construction, and comprises a pair of oval-shaped plates 84 and 86 with matching peripheries. As is best seen in Figures 1 and 3, the lower plate 86 has a cavity-spanning wall 87 which acts to separate the chambers 66 and 68, whereas the other plate 84 simply serves to co-operate with the lower partition plate to define in a minimum of space a damping orifice 88 interconnecting the two chambers in a manner such that the latter plate requires substantially less material since it need only be of annular or ring-shaped configuration as shown. To this end, the upper annular plate 84 and the lower partition plate 86 have flat annular-extending mating faces 90 and 92 which are each formed with a double-ended channel 94 and 96 therein that are of uniform depth and cross-section and wall thickness and co-operatively define the orifice 88 as a planar (non-spiralling) passage extending between the plates adjacent their periphery along an oval path just inwardly of and along the diaphragm rim 38. In addition, the plates 84 and 86 are each formed with an oval-shaped, right-angled opening 98 and 100 therethrough to one end only of their respective channel 94 and 96 and thereby to one end only of the orifice 88 so that it interconnects the chambers and with a length which may thereby be made substantially as expansive as the periphery of the plates, as is best seen in Figure 6.

Furthermore, the plates 84 and 86 are formed with interfitting inner shoulders 102 and 104 which co-operate to provide accurate fitting-together of the plates and in particular proper alignment of the channels 94 and 96 in defining the orifice.

With the plates 84 and 86 accurately aligned by such locators 102 and 104, the plates need not be further retained together by some additional fastening against separation of their mating faces 90 and 92, as the preload on the diaphragm rim 38 at final assembly acting at the shoulders 40 and 46 of the rim groove which captures the plates provides an adequate clamping load to maintain the plate faces in tightly sealed contact.

With reference now to the hydraulic damping decoupler assembly 37, this device is formed by two simple injection-moulded parts 134 and 136, preferably made of plastics material, which are fixed together by a double rivet connection through a central opening (window) 138 in the partition wall 87 of the lower plate 86 so as to have limited free travel with respect thereto, as shown. The riveted connection of the two damping decoupler parts is provided by the formation of two integral upstanding cylindrical pins 140 on the lower decoupler part 136 which engage through the partition plate opening 138 and with corresponding round holes 142 in the upper decoupler part, whereafter the heads of these pins are heat-formed to act as rivets to hold the upper decoupling part to the lower part.

Limited volume change in the chambers 66 and 68 to effect elimination of the hydraulic damping below a prescribed low amplitude at low frequencies is provided by the lower decoupler part 136 being formed with an upstanding piston (volume displacement) portion 148 which is slidably received in the partition plate opening 138. The opening 138 thus serves as a cylinder for the piston 148, which has a height greater than the cylinder length (i.e. the thickness of the partition wall 87) so as to have limited travel (stroke) with respect thereto as determined by the respective rims 152 and 154 of the decoupler parts 134 and 136 which sandwich and are alternatively sealingly abuttable with the opposite sides of the partition wall 87 about the opening 138, as is best seen in Figures 1, 3, 4, 7 and 8.

Because such limited free travel is dependent on only one wall thickness, which is that of the single partition wall 87, the decoupler tolerance is much simpler to control than if there were a double wall.

Moreover, the decoupler piston 148 and its cylinder 138 have a rectangular cross-section and profile respectively that prevent the decoupler assembly from turning in the partition, to thereby maintain side clearance between the decoupler parts 134 and 136 and the other portions of the respective plates 84 and 86.

The decoupler parts 134 and 136 each have a low-profile rectangular box shape occupying the respective chambers, and the decoupler piston 148 by virtue of its limited free travel with respect to the partition and in response to slow alternating pressure build-up in the two chambers 66 and 68 effects cyclic volume change in the chambers so as to permit vibratory amplitudes at low frequencies, such as up to 2 Hz, without forcing liquid to flow therebetween via the orifice 88. This effectively eliminates hydraulic damping below the prescribed low vibratory amplitude, for further damping control in the mount apart from that provided by the above-described compliant diaphragm rim 38.

The damping decoupler assembly 37 also substantially extends the range of usage of the mount in that the amplitude control by the diaphragm rim is relatively limited and may better remain constant so as not to require changes in the associated other parts, whereas the volume-displacement size of the damping decoupler can be readily changed to meet various amplitude control criteria without requiring other changes in the mount, simply by varying the cross-sectional area and/or stroke of the decoupler piston 148.

The retainer 20 is connected by the elastomer body 18 to the upper mounting member 10 but is mechanically connected to the lower mounting member 12 by the bent-over tabs 30 at final assembly. To ensure that the mounting members 10 and 12 remain connected in the event that the elastomeric connection between the retainer 20 and the mounting member 10 is lost, there is provided a steel pin 156 which traverses the yoke-shaped mounting member 10 between its studs 14 and is secured at its opposite ends to a pair of upstanding flanges 158 formed on the retainer 20, as is seen in Figures 1, 2, 3 and 5.

The hydraulic-elastomeric mount as thus far described, and apart from modifications of both the decoupler assembly 37 and partition plate 87 as will subsequently be described, is similar to that disclosed in the afore-mentioned EP-A-0142943.

With reference now to the details particularly characterising the preferred embodiment of the present invention, jounce rebound damping differentiation is simply added to such an existing mount by forming one or more by-pass or secondary orifices in the form of holes 160 (two being shown) through the partition wall 87 of the lower partition plate 86 adjacent the opposite ends of the decoupler opening 138 therethrough. Then, inasmuch as less damping is preferred in engine jounce than in rebound, the upper decoupler part 134 is simply extended in length at its opposite ends 161 so as to cover these holes and thereby serve as a check valve which operates to close these holes, as shown in Figures 3 and 8, when the pressure in the primary chamber 66 is greater than that in the secondary diaphragm chamber 68, which occurs during rebound of the engine as sensed at the mount, so that flow between the chambers is then only through the regular (primary) orifice 88 in the normal manner. On the pressure differential reversal accompanying the immediately-following jounce of the engine as sensed at the mount, the decoupler check valve 134, 136, 161 is forced thereby to uncover these holes (secondary orifices), as shown in Figure 4, to permit flow therethrough in addition to that through the primary orifice 88, so that there is less damping during the engine jounce condition.

Thereby, jounce rebound damping differentiation is provided with only slight modification and without having to add any additional parts, since only existing parts are utilized in the formation of both the check valve and the by-pass passage controlled thereby.

The improved performance that results from the addition of such bounce versus rebound damping differentiation is illustrated in Figure 9 by a relative force sinusoidal curve depicting the relative magnitude of damping difference of an actual mount constructed in accordance with the present invention. As can be seen, in this particular adaptation of the invention there was a 20% reduction in damping in the jounce direction.

Thus by the use of a hydraulic-elastomeric vehicle engine mount in accordance with the present invention, improved road isolation and in particular reduced harshness on medium to hard impacts is possible, and this result is obtainable with minimal modification of an existing engine mount, this being in contrast to having to add those parts normally required with such a valving system.

## Claims

1. A hydraulic-elastomeric vehicle engine mount having a pair of rigid mounting members (10, 12), a hollow elastomeric body (18) operatively interconnecting the members (10, 12), an elastomeric diaphragm (34) co-operating with the body (18) to form a closed cavity (64) that is substantially filled with a liquid, a rigid partition (36) dividing the cavity (64) into a chamber (66) enclosed by the body (18) and a chamber (68) enclosed by the diaphragm (34), an elongate damping orifice (88) having a length substantially greater than its width dimension interconnecting the chambers (66, 68) so as to provide hydraulic damping as one of the mounting members (10, 12) is forced to vibrate relative to the other in opposite directions at varying amplitudes and frequencies, and a singular rigid damping decoupler (37) mounted for free limited reciprocal movement on the partition (36) so as to effect cyclic volume change in one and then immediately the other of the chambers (66, 68) and thereby permit vibratory amplitudes below a prescribed level and frequency without liquid being forced through the damping orifice (88) and thus without hydraulic damping, characterised in that a secondary orifice (160) is formed through the partition (36) for interconnecting the chambers (66, 68), and singular rigid jounce-rebound control valve means (161) is disposed on and movable with the decoupler (37) for essentially immediately closing the secondary orifice (160) to prevent flow therethrough between the chambers on pressure build-up in one of the chambers (66, 68) and for essentially immediately opening the secondary orifice (160) to permit flow therethrough between the chambers on pressure build-up in the other chamber so as to essentially immediately effect a reduction in the hydraulic damping normally provided by the damping orifice (88) in one of the force directions as compared with that in the other force direction during damping decoupler operation.

2. A hydraulic-elastomeric vehicle engine mount according to claim 1, characterised in that the jounce-rebound control valve means (161) is integral with a movement-limiting portion (161) of the damping decoupler (37).

**Patentansprüche**

1. Hydraulisch-elastomere Fahrzeugmaschinen-Befestigung mit einem Paar starrer Befestigungsteile (10, 12), einem hohlen Elastomergehäuse (18), das wirksam die Teile (10, 12) miteinander verbindet, einer Elastomer-Membran (34), die mit dem Gehäuse (18) zusammen einen geschlossenen Hohlraum (64) bildet, der im wesentlichen mit einer Flüssigkeit gefüllt ist, wobei eine starre Teilwand (36) den Hohlraum (64) in eine durch das Gehäuse (18) umschlossene Kammer (66) und eine durch die Membran (34) umschlossene Kammer (68) unterteilt, mit einer länglichen Dämpfungsmündung (88), mit einer Länge, die wesentlich größer als ihre Breitenabmessung ist, und die die Kammern (66, 68) so verbindet, daß eine hydraulische Dämpfung geschaffen wird, wenn eines der Befestigungsteile (10, 12) relativ zum anderen in entgegengesetzter Richtung mit sich ändernden Amplituden und Frequenzen zu vibrieren gezwungen wird, und mit einem singulären starren Dämpfungsentkoppler (37), der frei begrenzt hin- und herbewegbar an der Teilwand (36) so angebracht ist, daß er zyklische Volumenänderungen in einer Kammer und dann unmittelbar in der anderen Kammer (66, 68) bewirkt und dadurch Vibrations-Amplituden zuläßt, die unter einem vorgeschriebenen Pegel und einer Frequenz liegen, ohne daß Flüssigkeit durch die Dämpfungsmündung (88) gedrückt wird, und so keine hydraulische Dämpfung entsteht, dadurch gekennzeichnet, daß eine sekundäre Mündung (160) zur Verbindung der Kammern (66, 68) durch die Teilwand (36) hindurch ausgebildet ist und ein singuläres starres Aufschlag/Rückschlag-Steuerventilmittel (161) an dem Entkoppler (37) angeordnet und mit ihm bewegbar ist, um im wesentlichen unmittelbar die sekundäre Mündung (160) zu schließen, um bei Druckaufbau in einer Kammer (66, 68) Durchfluß dahindurch zwischen den Kammern zu verhindern, und im wesentlichen unmittelbar die sekundäre Mündung (160) zu öffnen, um bei Druckaufbau in der anderen Kammer Strömung zwischen den Kammern zuzulassen und so im wesentlichen unmittelbar eine Herabsetzung der hydraulischen Dämpfung zu bewirken, die normalerweise durch die Dämpfungsmündung (88) in einer Kraftrichtung geschaffen wird, im Vergleich mit der anderen Kraftrichtung während des Dämpfungs-Entkoppelbetriebs.

2. Hydraulisch-elastomere Fahrzeugmaschinen-Befestigung nach Anspruch 1, dadurch gekennzeichnet, daß das Aufschlag/Rückschlag-Steuerventilmittel (161) integral mit einem Bewegungs-Begrenzungsabschnitt (161) des Dämpfungsentkopplers (37) ausgebildet ist.

**Revendications**

1. Support hydraulique-élastomère pour moteur de véhicule, comportant deux éléments de montage rigides (10, 12), un corps creux en élastomère (18) qui assemble fonctionnellement les éléments (10, 12), une membrane en élastomère (34) qui coopère avec le corps (18) pour former une cavité fermée (64) qui est remplie d'un liquide, une cloison rigide (36) qui divise la cavité (64) en une chambre (66) entourée par le corps (18) et une chambre (68) entourée par la membrane (34), un orifice d'amortissement allongé (88), qui a une longueur supérieure à sa largeur et qui fait communiquer les chambres (66, 68) de façon à établir un amortissement hydraulique lorsque l'un des éléments de montage (10, 12) est contraint à vibrer par rapport à l'autre dans des sens opposés à des amplitudes et fréquences variables, et un unique découpleur d'amortissement rigide (37) monté pour un mouvement alternatif libre limité sur la cloison (36) de manière à déterminer un changement de volume cyclique dans l'une des chambres (66, 68) et, aussitôt après dans l'autre de ces chambres, et pour permettre de cette façon des amplitudes vibratoires inférieures à un niveau et une fréquence prescrits sans que le liquide ne soit obligé de s'écouler à travers l'orifice d'amortissement (88) et, par conséquent, sans amortissement hydraulique, caractérisé en ce qu'un orifice secondaire (160) est formé dans la cloison (36) pour faire communiquer les chambres (66, 68) et que des moyens obturateurs uniques rigides (161), de réglage de compression et de rebord, sont disposés sur le découpleur (37) et peuvent se déplacer avec ce dernier pour fermer immédiatement l'orifice secondaire (160), afin d'émpêcher le fluide de s'écouler entre les chambres à travers cet orifice en réponse à l'établissement d'une pression dans l'une des chambres (66, 68), et pour ouvrir immédiatement l'orifice secondaire (160), afin de permettre au fluide de s'écouler à travers lui entre les chambres en réponse à l'établissement d'une pression dans l'autre chambre, de façon à provoquer immédiatement une réduction de l'amortissement hydraulique normalement engendré par l'orifice d'amortissement (88) dans l'un des sens de la force, par rapport à celui qui est engendré dans l'autre sens de la force pendant le fonctionnement du découpleur d'amortissement.

2. Support hydraulique-élastomère pour moteur de véhicule selon la revendication 1, caractérisé en ce que les moyens obturateurs (161) de maîtrise de compression et de rebond sont d'une seule pièce avec une portion de limitation de déplacement (161) du découpleur d'amortissement (37).

Fig. 1

Fig. 2

Fig. 4

Fig. 3

EP 0 194 035 B1

*Fig.5*

*Fig.6*

*Fig.7*

*Fig.8*

2

Fig. 9